(19) Europäisches Patentamt

European Patent Office

Office européen des brevets

(11) **EP 0 881 466 B1**

(12) **EUROPEAN PATENT SPECIFICATION**

(45) Date of publication and mention
of the grant of the patent:
**05.07.2006 Bulletin 2006/27**

(51) Int Cl.:
***G01C 21/20*** *(2006.01)*

(21) Application number: **98109537.5**

(22) Date of filing: **26.05.1998**

(54) **Navigation device**

Navigationsvorrichtung

Appareil de navigation

(84) Designated Contracting States:
**DE FR GB**

(30) Priority: **27.05.1997 JP 1366997**

(43) Date of publication of application:
**02.12.1998 Bulletin 1998/49**

(73) Proprietor: **Xanavi Informatics Corporation**
**Zama-shi,**
**Kanagawa-ken (JP)**

(72) Inventors:
• **Okude, Mariko**
**Hitachi-shi,**
**Ibaraki-ken (JP)**

• **Endo, Yoshinori**
**Mito-shi,**
**Ibaraki-ken (JP)**
• **Nakamura, Kozo**
**Hitachioota-shi,**
**Ibaraki-ken (JP)**

(74) Representative: **Altenburg, Udo et al**
**Patent- und Rechtsanwälte**
**Bardehle . Pagenberg . Dost .**
**Altenburg - Geissler**
**Galileiplatz 1**
**81679 München (DE)**

(56) References cited:
**EP-A- 0 534 892      EP-A- 0 749 103**
**DE-A- 3 439 000      US-A- 4 939 663**

**Description**

BACKGROUND OF THE INVENTION

1. FIELD OF THE INVENTION

The present invention relates to a navigation device for displaying a current position of a vehicle, and particularly to a navigation device for displaying a current position of a vehicle by being superposed on a map which is stereoscopically displayed.

2. DESCRIPTION OF RELATED ART

Conventionally, there has been known a navigation device for facilitating driving of an automobile. According to the navigation device, digital map data recorded in a record medium such as CD-ROM or the like is read, a map is displayed on a screen of a display device such as a liquid crystal display or the like and the current position of a vehicle (position of a driving car) that is detected ny a position measuring system of a GPS (Global Positioning System) receiving device or the like is overlappingly displayed. Further, a route from the current position to a target location is displayed and the vehicle is guided along that route.

According to a such a navigation device, it is normal to display a planar map (two-dimensional map) on a screen. However, there also is a navigation device for displaying a quasi three-dimensional map to further promote visibility. The method of displaying a quasi three-dimensional map is referred to as "quasi three-dimensional display" in which a perspective view (bird's eye view), that is obtained when a driving vehicle is viewed from an observing point set at a predetermined position in the sky above the driving vehicle in a direction forming an acute angle with respect of the ground, is formed based on map data representing a two-dimensional map and a perspective view is displayed in a display device. In this way, depth perception is given to an operator.

Meanwhile, in displaying the position of a driving vehicle on a screen, there is a case where processing referred to as map matching is also used. Map matching is processing for correcting the position of a driving vehicle detected by a position measuring system based on road coordinates obtained from map data read from a record medium. By also using the map matching, extreme departure of the position of a driving vehicle from a road displayed on a screen can be prevented.

EP-A-0 749 103 A1 discloses a map searching unit which reads from a map storing unit map data adjacent to the current position of a vehicle calculated by a position calculator 1 or map data having a range of a map to be displayed specified by an input unit. A processing unit performs a perspective transformation of eye point and focus point coordinates inputted from the input unit, maps the map data on the transformed coordinates, performs clipping, and then makes an output unit display the map after mapping.

EP-A-0 534 892 A1 discloses a method for navigation of a vehicle travelling over a terrain in which the change in elevation of the vehicle are continuously measured, in addition to the distance and heading. The distance measurements are continuously corrected by the change in elevation in determining the instantaneous location of the vehicle with respect to a known point. The approximate location can also be obtained from a satellite GPS (Global Positioning System). The measured elevation may also be compared with the elevation in reference data, such as data in a three-dimensional map of the area to prevent the accumulation of errors or to make the determined location more precise.

SUMMARY OF THE INVENTION

According to the conventional navigation device, a map is displayed on the screen of the displaying device based on two-dimensional map data. Therefore, even in the case where the "quasi three-dimensional display" explained above is used, a multilevel intersection, a slope, a building or the like is displayed planarly (two-dimensionally). Therefore, there are cases where a situation in the vicinity of a driving vehicle, the vicinity of a target position or the like is difficult to grasp.

Hence, in recent years, there has been an increasing demand for a navigation device for displaying a stereoscopic map based on three-dimensional map data, in order to further facilitate grasping a situation in the vicinity of a position of a driving vehicle, the vicinity of a target position or the like, which cannot be expressed two-dimensionally.

However, when a stereoscopic map is displayed, a problem can be anticipated in which even when the map matching explained above is also used, abnormal display may occur, for example, such that the position of driving vehicle is disposed in the air above a road. This is due to the fact that the altitude data of the driving vehicle from the position measuring system is used in display processing with a detection error as it is.

Hence, it is an object of the present invention to be able to display the position of a driving vehicle along a road stereoscopically drawn even when the position measuring accuracy in the height direction is low when a stereoscopic map is displayed based on three-dimensional map information with respect to land form, roads and so on.

This object is achieved according to the invention by a navigation device as defined in independent claim 1. Advantageous embodiments are depicted in the dependent claims. Advantages of the present invention will be apparent to those skilled in the art.

BRIEF DESCRIPTION OF THE DRAWINGS

Fig. 1 is a block diagram showing a constitution of a navigation device according to a first embodiment of the present invention;

Fig. 2 is a block diagram showing a hardware constitution of an operation processing unit according to the first embodiment of the present invention;

Fig. 3 is a block diagram functionally illustrating the operation processing unit according to the first embodiment of the present invention;

Fig. 4 is a diagram showing a data constitution of a map data base according to the first embodiment of the present invention;

Fig. 5 is a flowchart showing processing executed by a position correcting unit according to the first embodiment of the present invention;

Fig. 6 is a diagram for explaining the processing of Fig. 5;

Fig. 7 is a diagram for explaining calculation of an altitude by the position correcting unit according to the first embodiment of the present invention;

Fig. 8 is a flowchart showing processing executed by a position correcting unit according to a second embodiment of the present invention;

Fig. 9 is a diagram for explaining detection of height using a grade sensor;

Fig. 10 is a flowchart showing processing executed by a position correcting unit according to a third embodiment of the present invention;

Fig. 11 is a view for explaining the processing of Fig. 10;

Fig. 12 is a flowchart showing processing executed by a position correcting unit according to a fourth embodiment of the present invention;

Fig. 13 is a flowchart showing processing executed by a position correcting unit according to a fifth embodiment of the present invention;

Fig. 14 is a diagram for explaining a case in which a region comprising a plurality of regional mesh portions is displayed on a display screen;

Fig. 15 is a flowchart showing processing of a position correcting unit according to a sixth embodiment of the present invention;

Fig. 16 is a view showing an example of a picture image including a map in a three-dimensional display and a mark indicating a current position of a vehicle; and

Fig. 17 is a view showing other example of a picture image including a map in a three-dimensional display and a mark indicating a current position of a vehicle.

DETAILED DESCRIPTION OF THE PREFERRED EMBODIMENTS

An explanation will be given of embodiments of the present invention with reference to the attached drawings.

First, an explanation will be given of a first embodiment of the present invention.

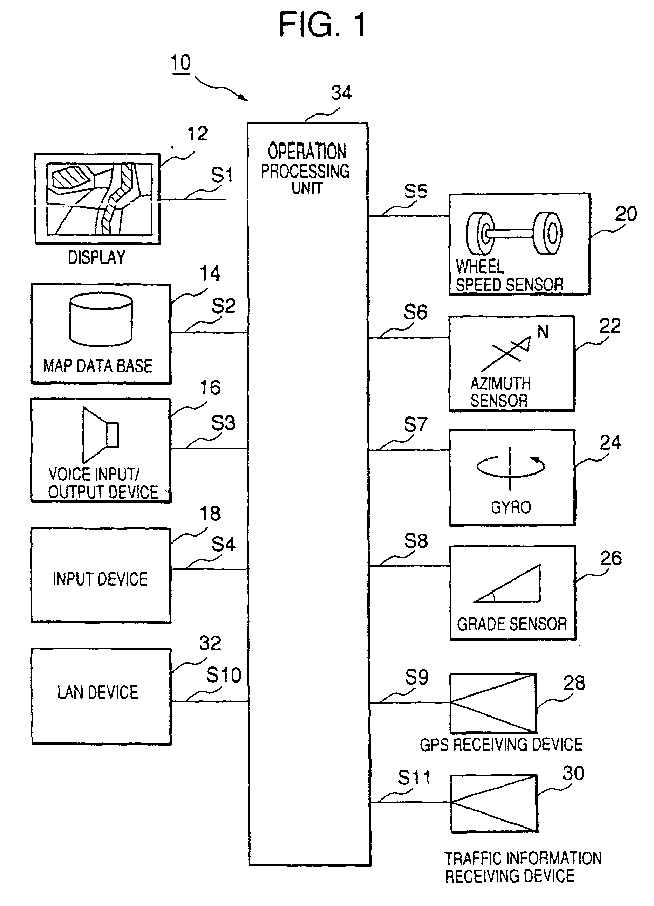

Fig. 1 is a block diagram showing a constitution of a navigation device according to the first embodiment of the present invention.

As shown by Fig. 1, a navigation device 10 includes a display device 12 comprising a CRT or a liquid crystal display, a device for reading map data from a map data base 14 comprising a record medium of CD-ROM, DVD (Digital Video Disk), an IC card or the like, a voice input and output device 16 for converting a given signal into a voice signal and outputting the voice signal, recognizing voice uttered by a user and forming a signal based thereon, an input device 18 constituted by hard switches of a scroll key, a contraction scale change key and the like, a joy stick and a touch panel arranged on a screen of the display device 12, a wheel speed sensor 20 for measuring a number of rotations of a wheel and measuring a travel distance of a vehicle based on a product of the rotational number by a circumference of wheel, an azimuth sensor 22 for detecting an orientation of the vehicle (vehicle direction) by detecting a magnetic field of the earth, an angle gyro 24 such as an optical fiber gyro, an oscillation gyro or the like, a grade sensor 26 for detecting an angle of inclination in a height direction (direction orthogonal to ground surface) of the vehicle, a GPS receiving device 28 for measuring a current position, a traveling direction and a traveling orientation of the vehicle by receiving signals from three or more of GPS (Global Positioning System) satellites and measuring distances between the vehicle and the respective GPS satellites and rates of change of the distances, a traffic information receiving device 30 for receiving traffic information of information of road traffic congestion, traffic control information such as an under road construction state, traffic closure or the like, or information about parking lots and so on transmitted from beacon transmitters or FM multiplex broadcast stations and a vehicular LAN (Local Area Network) device 32 for communicating various information about the vehicle.

Map data stored in the map data base 14 includes road data. The road data includes node data indicating coordinates of positions in correspondence with intersections of roads and link data indicating links for connecting nodes.

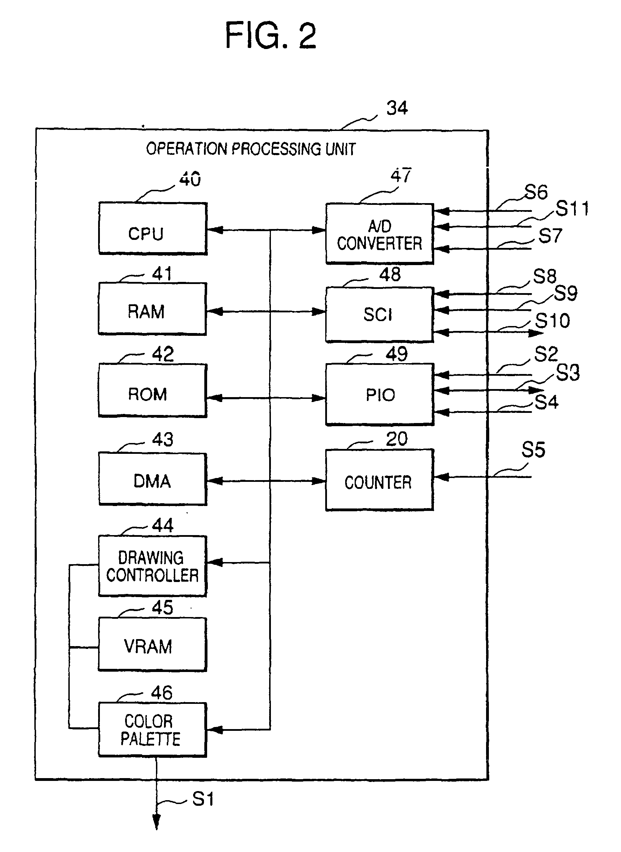

The respective constituent parts of the navigation device explained above are connected to an operation processing unit 34. The operation processing unit 34 calculates a current position of the vehicle based on data outputted from the various sensors (20 through 26) in accordance with programs stored in ROM (refer to numeral 42 of Fig. 2) and the like. Further, the operation processing unit 34 reads necessary map data from the map data base 14 based on the calculated information with respect to the current position, forms a picture image in correspondence with the read map data, superposes a current position mark indicating the current position of the vehicle on the formed picture image and outputs them to the display device 12.

Further, the operation processing unit 34 calculates optimum route connecting positions (for example, current position and target position) instructed by the user via the input device 18 and outputs the route to the display device 12 or carries out processing for guiding the vehicle along the route by voice via the voice input and output device 16.

Further, according to the embodiment, as a signal S1 transmitted between the operation processing unit 34 and the display device 12, an RGB signal or an NTSC (National Television System Committee) signal is used.

Next, a detailed explanation will be given of the operation processing unit 34 among the respective constituent parts of the navigation device shown by Fig. 1.

Fig. 2 is a block diagram showing a hardware constitution of the operation processing unit 34.

As shown in Fig. 2, the operation processing unit 34 includes CPU 40 for controlling numerical calculation and respective devices described below, RAM 41 for temporarily storing map data or data obtained by calculation, ROM 42 for storing programs executed by CPU 40 and data necessary for executing the programs, DMA (Direct Memory Access) 43 for executing high speed data transmission among memories and between the memories and the respective devices, a drawing controller 44 for executing graphics drawing such as developing vector data into pixel data or the like and executing display control, VRAM 45 for temporarily storing graphics image data, a color palette 46 for converting image data into an RGB data, an A/D (Analog to Digital) converter 47 for converting analog signals into digital signals, a serial parallel converter (SCI) 48 for converting serial signals into parallel signals in synchronism with a bus, PIO 49 for putting signals on the bus in synchronism with the parallel signals and a counter 50 for integrating pulse signals.

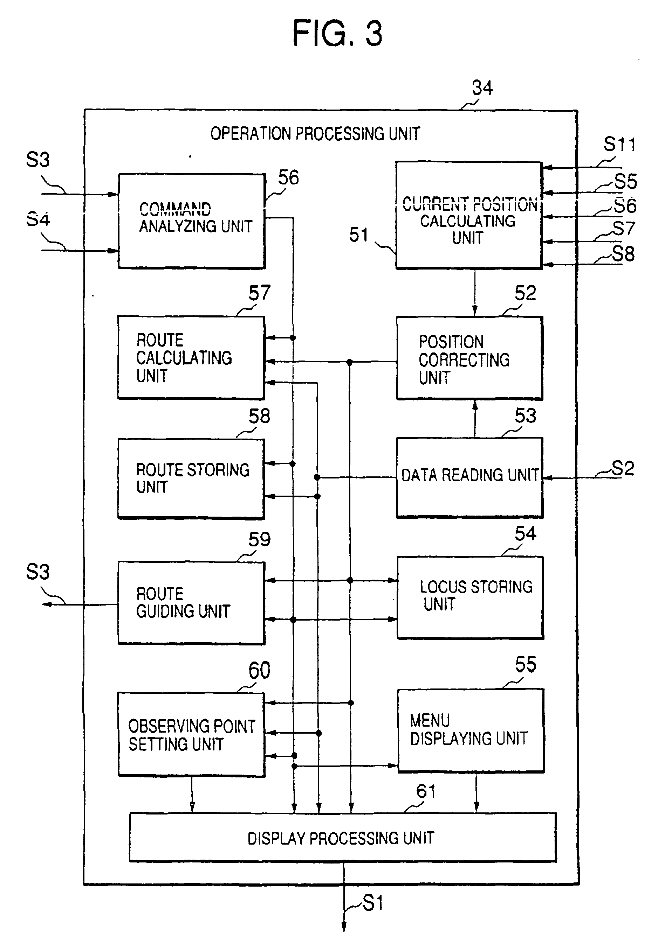

Fig. 3 shows a functional block diagram functionally illustrating the operation processing unit 34 constituted by these devices.

As shown in Fig. 3, the operation processing unit 34 is functionally constituted by a current position calculating unit 51, a position correcting unit 52, a data reading unit 53, a locus storing unit 54, a menu display unit 55, a command analyzing unit 56, a route calculating unit 57, a route storing unit 58, a route guiding unit 59, an observing point setting unit 60 and a display processing unit 61.

The function of the current position calculating unit 51 is realized by CPU 40, the A/D converter 47, SCI 48 and the like in Fig. 2. The current position calculating unit 51 calculates distance data and angle data by respectively integrating a distance pulse data S5 obtained from the wheel speed sensor 20 and angular acceleration data S7 obtained from the gyro 24. Further, the present position calculating unit 51 calculates a position (X', Y') after the vehicle has traveled from an initial position (X, Y) by time-sequentially integrating the calculated distance data and angle data.

Further, the current position calculating unit 51 corrects an absolute orientation of a traveling direction of the vehicle by using orientation data S6 obtained from the orientation sensor 22 and the angle data produced by integrating the angular acceleration data S7 obtained from the gyro 24. Further, when the data obtained from the sensors mentioned above are integrated, error of the sensors is accumulated and therefore, the current position calculating unit 51 executes, at a time cycle, processing for canceling the accumulated error based on position data S8 obtained from the GPS receiving device 28.

The position correcting unit 52 is realized mainly by CPU 40 in Fig. 2. The position correcting unit 52 promotes positional accuracy by correcting the error of the sensors included in the current position of the vehicle calculated by the current position calculating unit 51. The position correcting unit 52 outputs a vehicle position in three dimensions (three-dimensional vehicle position) by executing the altitude correction with respect to the current position of the vehicle mentioned below. Further, the position correcting unit 52 carries out conventional two-dimensional map matching in the case of outputting a vehicle position on a planar map (two-dimensional vehicle position).

In this case, using the data reading unit 53 realized by PIO 49 in Fig. 2, the map matching is realized by comparing roads included in a map at the surrounding of the current position of the vehicle read from the map data base 14 with the traveling locus of the vehicle obtained from the current position calculating unit 51 and matching the current position of the vehicle to a road having the highest correlation with respect to shape. When the vehicle position is displayed to be superposed on the planar map, the calculated current position of the vehicle can be made to coincide with a road on which the vehicle actually travels by the map matching.

The current position data outputted from the position correcting unit 52 is stored to the locus storing unit 54 at every predetermined distance of vehicle traveling. The function of the locus storing unit 54 is realized mainly by RAM 41, DMA 43 and the like in Fig. 2. Locus data indicating the traveling locus of the vehicle is used for drawing a locus mark on a corresponding road on the map with respect to the road on which the vehicle has traveled.

The command analyzing unit 56 analyzes a request of the user received by the input device 18 and controls the respective units such that corresponding processing is executed. The function of the command analyzing unit 56 is realized mainly by CPU 40, PIO 49, ROM 42 and the like in Fig. 2.

For example, when the user requests guidance along a route to a target position, the command analyzing unit 56 instructs the display processing unit 61 to carry out processing of displaying a map including the current position of the vehicle and the target position and instructs the route calculating unit 57 to carry out processing of calculating a route from the current position of the vehicle to the target position.

The route calculating unit 57 searches the route between the instructed positions based on the map data by using the Dykestra Method or the like and stores data with respect to a calculated route in the route storing unit 58. The data with respect to the route comprises data indicating nodes and links constituting the route. Further, according to the Dykestra Method, a route having the shortest distance between the instructed positions, a route capable of reaching the target position in the shortest time period, a route having the least cost and the like can be calculated.

The function of the route guiding unit 59 is realized mainly by CPU 40, PIO 49 and the like in Fig. 2. The route guiding unit 59 compares link data of a guided route stored in the route storing unit 58 with the current position data of the vehicle outputted from the position correcting unit 52, determines whether the vehicle is to go straight or turn right or left before the vehicle reaches an intersection (which corresponds to a node in data), forms voice data based on the determination and outputs the voice data to the voice input and output device 16. Alternatively, the route guiding unit 59 informs the route to the user by indicating a direction in which the vehicle is to travel on the map displayed on the screen via the display processing unit 61 on the basis of the determination.

The data reading unit 53 reads map data requested by various constituent units from the map data base 14. The function of the observing point setting unit 60 is realized mainly by CPU 40. As mentioned below, the observing point setting unit 60 determines an observing point, a line of sight and an angle of field of view for three-dimensional display or quasi three-dimensional display.

The function of the display processing unit 61 is realized mainly by the drawing controller 44, VRAM 45 and the color palette 46 in Fig. 2. The display processing unit 61 reads map data in the vicinity of a position to be displayed on the screen of the display 12 from the map data base 14 via the data reading unit 53, subjects a map constituted by the map data to graphic development based on the observing point, the line of sight and the angle of field of view instructed by the observing point setting unit 60 and contraction scale, drawing method and drawing orientation instructed by the command analyzing unit 56 and stores picture image data temporarily in VRAM 45. The picture image data held temporarily in VRAM 45 is added with color by the color palette 46 and is transmitted to the display 12. Thereby, a desired map is displayed on the screen of the display 12.

The menu displaying unit 55 transmits various kinds of requested menus or marks to the display processing unit 61 in accordance with instructions outputted from the command analyzing unit 56. Thereby, a map superposed with desired menus or marks is displayed on the screen of the display 12.

Next, a detailed explanation will be given of processing carried out by the position correcting unit 52 among the respective functional constitutions of the operation processing unit 34 shown by Fig. 3.

First, prior to the explanation of the processing, an explanation will be given of data constitution of map data stored in the map data base 14.

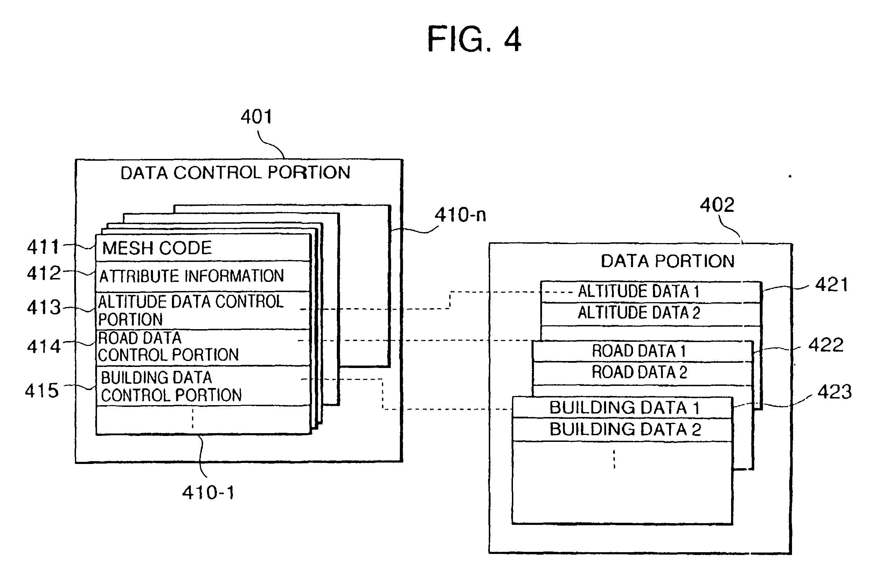

Fig. 4 is a diagram showing data constitution of map data stored in the map data base 14.

As shown by Fig. 4, the map data is constituted by a data control portion 401 and a data portion 402. In this case, a map is expressed as an aggregation of standard area meshes partitioned by longitudinal lines and latitudinal lines at constant intervals.

The data control portion 401 is provided with control tables 410-1 through 410-n in correspondence with the respective standard area meshes. Each of the control tables includes a mesh code 411, attribute information 412, an altitude data control portion 413, a road data control portion 414 and a building data control portion 415.

The mesh code 411 is an identification number uniquely determined for each of the standard area meshes. The attribute information 412 includes a map scale, creation year, month and day of map data, a title of a drawing sheet and so on. The altitude data control portion 413 is constituted by data specifying link destination of altitude data, mentioned below. The road data control portion 414 and the building data control portion 415 are constituted respectively by data specifying link destinations of road data and building data, mentioned below.

The data portion 402 is constituted by a group of altitude data 421 for indicating respective values of altitudes of the standard area meshes, a group of road data 422 indicating links connecting nodes in correspondence with intersections and the like and a group of building data 423 indicating buildings.

The respective altitude data constituting the group of altitude data 421 include data indicating values of altitudes at positions sampled at equal intervals with respect to the standard area meshes in correspondence therewith. Accordingly, land forms of the standard area meshes can be specified based on the data indicating the values of the altitudes.

The respective road data constituting the group of road data 422 are constituted by links connecting nodes, coordinates of nodes, attributes of roads such as toll roads, national roads, prefectural roads and so on, and data indicating heights (offset values) of roads from the ground surface and the like.

The respective building data constituting the group of building data 423 are constituted by data indicating titles, shapes, heights and so on of buildings.

Any of the altitude data, the road data and the building data included in the group of altitude data 421, the group of road data 422 and the group of building data 423, are specified respectively by link information included in the altitude data control portion 413, the road data control portion 414 and the building data control portion 415. Thereby, the altitude data and the like in one of the standard area meshes is specified.

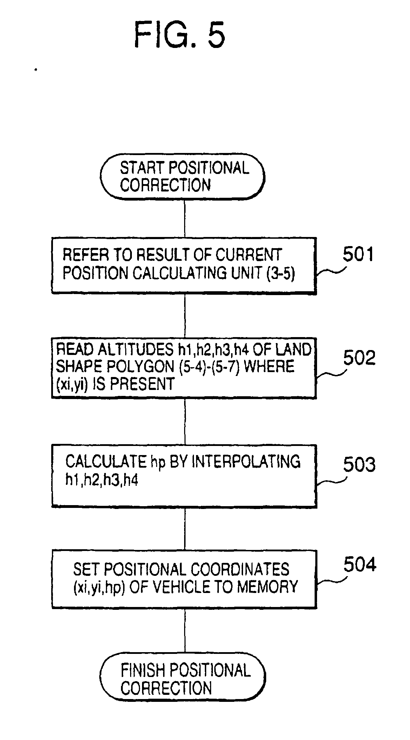

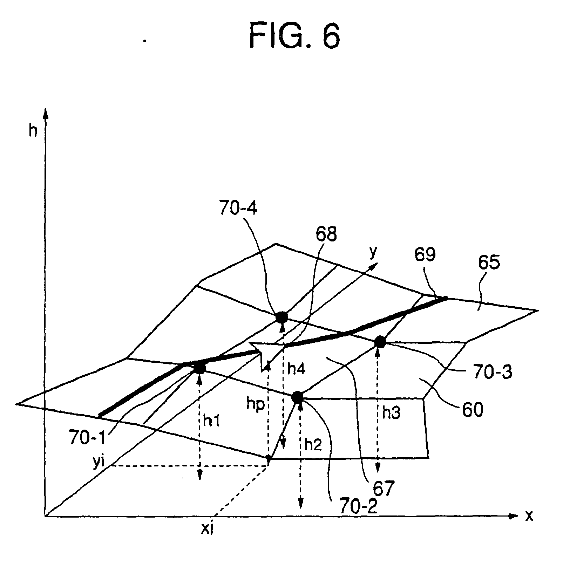

Now, an explanation will be given of the processing executed by the position correcting unit 52 in reference to Fig. 5 and Fig. 6. Fig. 5 is a flowchart showing the processing executed by the position correcting unit 52 and Fig. 6 is a diagram for explaining the processing of Fig. 5.

As mentioned above, according to the embodiment, a three-dimensional map shown by Fig. 6 is formed by using a three-dimensional coordinates system having a longitudinal direction of x, a latitudinal direction of y and a height direction of z.

In Fig. 6, reference numerals 60, 65 and so on (hereinafter, referred to as "ground surface") correspond to the standard area meshes explained in reference to Fig. 4. Further, notations 70-1 through 70-4 designate unit polygons constituting a ground surface 67 which correspond to vertices of a polygonal face (ground surface) where a vehicle position (xi, yi, hp) 68 is present. Further, reference numeral 69 designates a road in Fig. 6. These are obtained from various data stored in the map data base 14 shown by Fig. 4.

In Fig. 5, first, when the current position of the vehicle is updated, the position correcting unit 52 obtains the current position of the vehicle provided by the current position calculating unit 51 and obtains map data in the vicinity of the current position via the data reading unit 53. Further, the position correcting unit 52 calculates (corrects) the two-dimensional current position (xi, yi) of the vehicle based on the obtained data such that the current position of the vehicle is matched to a road having the highest correlation between the traveling locus of the vehicle and the shape of the road (step 501).

Next, the position correcting unit 52 obtains heights h1 through h4 of the vertexes 70-1 through 70-4 of the polygonal face where the current position (xi, yi) is present (refer to Fig. 6) from the map data base 14 via the data reading unit 53 (step 502).

Thereafter, the position correcting unit 52 calculates the height hp of the vehicle by interpolating the heights h1 through h4 (step 503) and temporarily stores the obtained three-dimensional coordinates (xi, yi, hp) indicating the current position of the vehicle (step 504). This operation is actually realized by storing them in a predetermined region of RAM 41 (refer to Fig. 2).

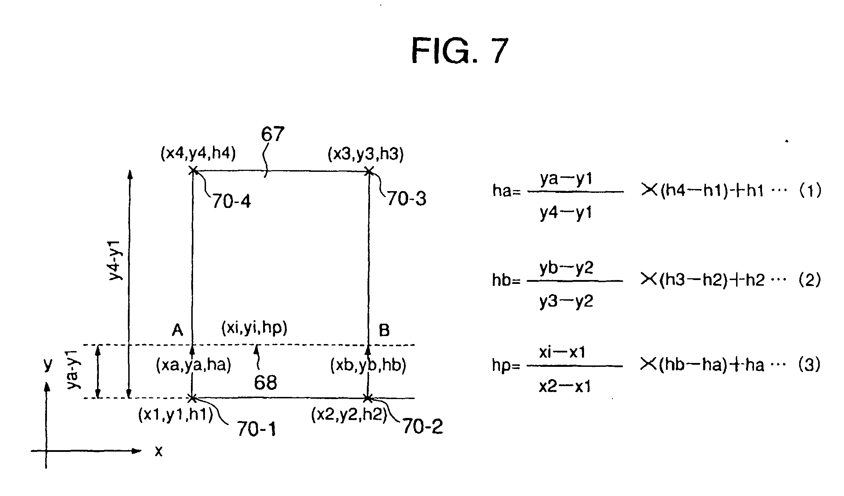

Here, a simple explanation will be given of an example of a method of calculating the height hp of the vehicle according to the embodiment. According to the embodiment, for example, the altitude hp can be obtained by using a method of linear interpolation. Fig. 7 is a diagram for explaining calculation of the height hp in correspondence with the substantially planar view of the polygonal face (ground surface) 67 of Fig. 6.

First, a value (altitude) ha in z direction at intersection A of a straight line in parallel with a straight line connecting the vertexes 70-1 and 70-2 and passing through the current position 68 of the vehicle and a straight line connecting the vertexes 70-1 and 70-4, is calculated by the following equation (1).

$$ha = (ya - y1)/(y4 - y1) \cdot (h4 - h1) + h1 \quad \cdots (1)$$

Next, a value (altitude) hb in the z direction at intersection B between the parallel straight line mentioned above and a straight line connecting the vertexes 70-2 and 70-3, is calculated by the following equation (2).

$$hb = (yb - y2)/(y3 - y2) \cdot (h3 - h2) + h2 \quad \cdots (2)$$

Finally, the altitude hp of the current position 68 of the vehicle is calculated by the following equation (3) by using the obtained values of ha and hb.

$$hp=(xi-x1)/(x2-x1)\cdot(hb-ha)+ha \cdots(3)$$

When the calculation of the current position of the vehicle has been completed, the obtained current position data is stored in the locus storing unit 54. The current position data is provided to the display processing unit 61. The display processing unit 61 forms a picture image superposed with an arrow mark indicating the current position of the vehicle on the map (three-dimensional map) which is read via the data reading unit 53 and which is constituted by map data of a region specified by the observing point and the angle of field of view set by the observing point setting unit 60. Thereby, the arrow mark indicating the current position of the vehicle can be overlappingly displayed in the three-dimensional display map on the screen of the display 12.

According to the embodiment, the value (altitude) in the z direction of the current position of the vehicle is calculated from predetermined coordinates of the polygonal face (ground surface) where the current position of the vehicle is present and accordingly, even in the case where position measuring accuracy in the height direction is low, the mark indicating the vehicle can be displayed with no departure from maps or roads on the screen.

An explanation has been given of the first embodiment of the present invention.

Next, an explanation will be given of a second embodiment of the present invention.

According to the embodiment, the constitution of the navigation device 10 is similar to that shown by Fig. 1 through Fig. 3 except for the processing executed by the position correcting unit 52 (refer to Fig. 3). Hence, an explanation will be given here only with respect to the processing of the position correcting unit 52 and an explanation of other parts will be omitted.

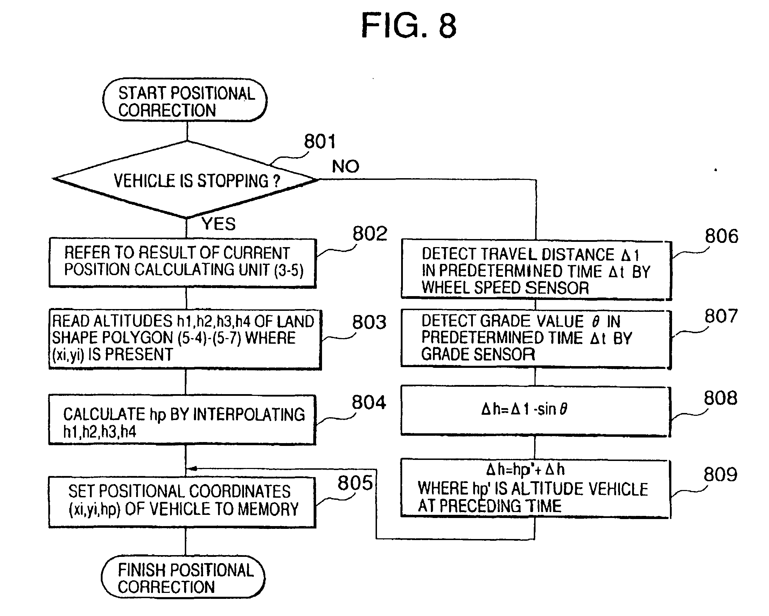

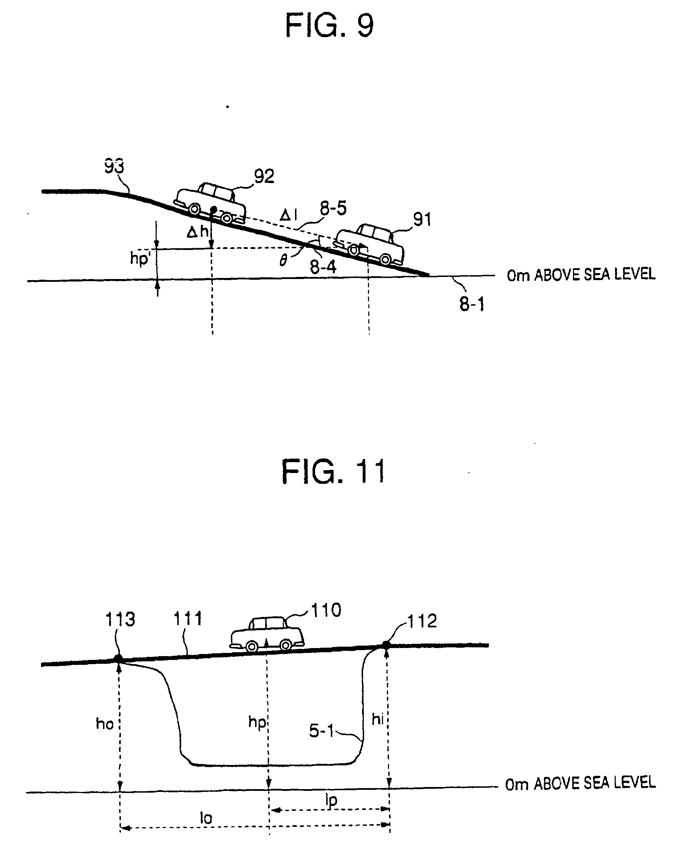

Fig. 8 is a flowchart showing processing executed by the position correcting unit 52 according to the second embodiment of the present invention and Fig. 9 is a view for explaining height detection using a grade sensor.

As shown by Fig. 8, the position correcting unit 52 firstly determines whether the vehicle is stopping (step 801). This determination can be carried out based on the sensor value of the wheel speed sensor 20 provided in the current position calculating unit 51. When the determination is yes (Y) in step 801, processing of steps 802 through 805 is carried out. The processing of the steps 802 through 805 correspond respectively to the processing at steps 501 through 504 shown by Fig. 5 and accordingly, an explanation thereof will be omitted.

Meanwhile, when the determination is no (N) in step 801, the operation detects a travel distance $\Delta l$ during a predetermined time period $\Delta t$ based on the sensor value of the wheel speed sensor 20 provided to the current position calculating unit 51 (step 806). Next, the operation detects a grade $\theta$ based on the sensor value of the grade sensor 26 provided to the current position calculating unit 51 (step 807). The grade $\theta$ may be a difference between the grade value at a predetermined time t and the grade value at time t+ $\Delta t$ after elapse of a predetermined time period $\Delta t$. Alternately, it may be the grade value at a certain time during the predetermined time period $\Delta t$.

Thereafter, the operation calculates a change in the height $\Delta h= \Delta l\cdot sin\theta$ by using the travel distance $\Delta l$ and the grade $\theta$ (step 808). Next, the operation provides the current altitude hp of the vehicle by adding $\Delta h$ to an altitude (designated by hp') which has been calculated at a preceding time (step 809). In Fig. 9, the altitude of a vehicle 91 is the altitude hp' which has been calculated at a preceding time. The altitude of a vehicle 92 after elapse of the predetermined time period $\Delta t$ is changed from the altitude of the vehicle 91 by $\Delta h$. Accordingly, the altitude hp of the vehicle 91 is calculated by hp=hp'+$\Delta h$.

After calculating the altitude hp of the vehicle, the operation proceeds to step 805 and the coordinates (xi, yi, hp) of the current position of the vehicle is stored in the locus storing unit 54.

According to the embodiment, when the vehicle travels, by using the sensor value of the grade sensor, the change in the altitude of the vehicle is calculated by comparatively simple calculation, the altitude of the current position of the vehicle is calculated based thereon and accordingly, high speed formation of the processing can be achieved. Meanwhile, when the vehicle is stopping, the interpolation calculation where the coordinates of the vehicle are positioned on the polygonal face (ground surface) in the map is executed by which the error of the grade sensor can be canceled.

An explanation has been given of the second embodiment of the present invention.

Next, an explanation will be given of a third embodiment of the present invention.

The embodiment includes processing for calculating the altitude of a vehicle more accurately when a road is not constituted along a land form.

Further, according to the embodiment, the constitution of the navigation device 10 is similar to that shown by Fig. 1 through Fig. 3 except that processing executed by the position correcting unit 52 (refer to Fig. 3) is similar to the second embodiment. Hence, in this embodiment, an explanation will be given only for the processing of the position correcting unit 52 and an explanation of the other parts will be omitted.

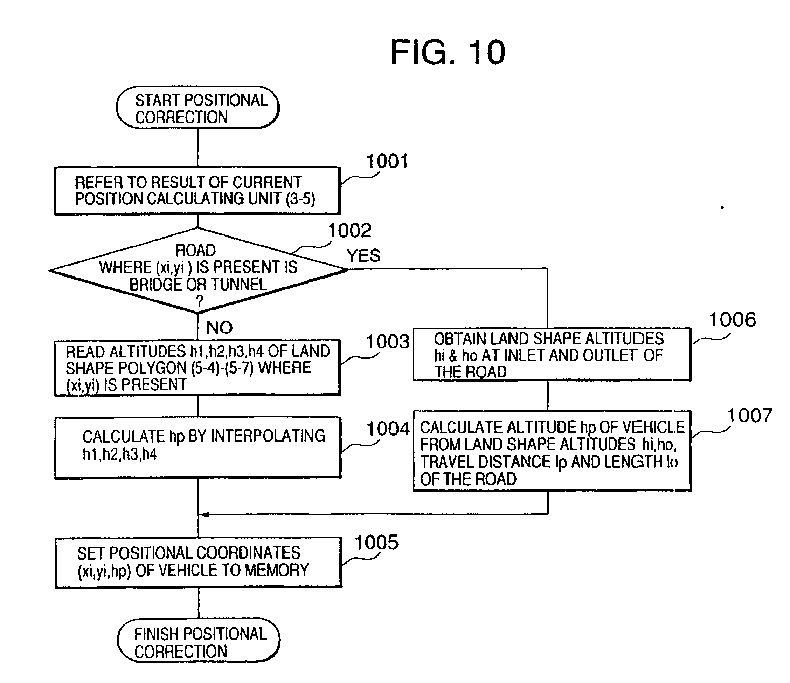

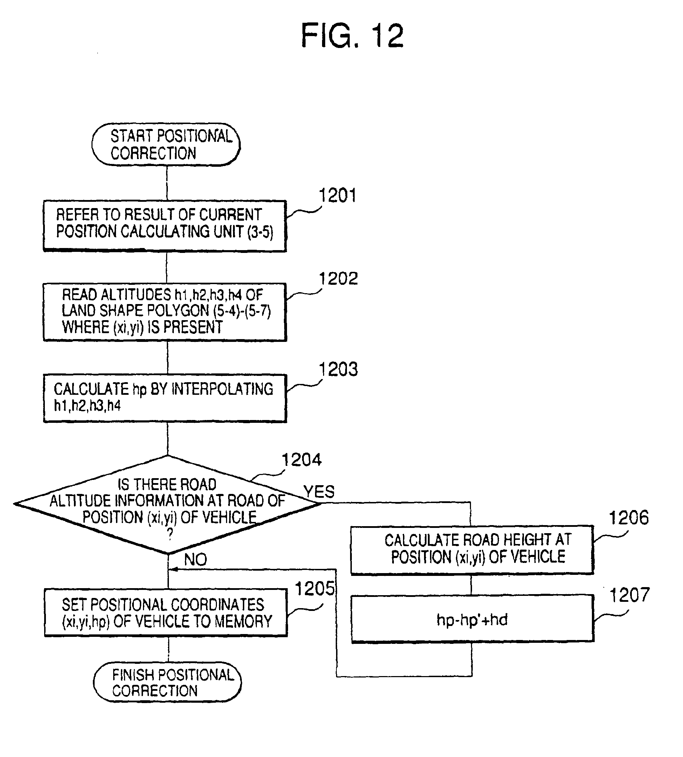

Fig. 10 is a flowchart showing the processing executed at the position correcting unit 52 according to the third embodiment of the present invention and Fig. 11 is a view for explaining the processing of Fig. 10.

In Fig. 10, firstly, the position correcting unit 52 obtains the current position of the vehicle and map data at the surrounding of the current position and calculates a road having the highest correlation between the traveling locus of the vehicle and the shape of a road based on the data similar to step 501 in Fig. 5. Further, the position correcting unit 52 calculates (corrects) the two-dimensional current position (xi, yi) of the vehicle such that the current position of the vehicle is matched to the calculated road (step 1001).

Next, the operation determines whether the road (node) matched to the current position of the vehicle is disposed on a bridge or in a tunnel (step 1002). When the determination is no (N) in step 1002, the operation executes processing (steps 1003 through 1005) which correspond to steps 502 through 504 in Fig. 5.

Meanwhile, when the determination is yes (Y) in step 1002, the operation obtains an altitude hi at an inlet of the bridge or the tunnel and an altitude ho at an outlet thereof referring to the road data (step 1006). For example, referring to Fig. 11, when a vehicle 110 is running on a bridge 111, the operation obtains an altitude hi of an inlet 112 of the bridge 111 and an altitude ho of an outlet 113 thereof.

Next, the operation calculates the altitude hp at the current position of the vehicle based on the altitude hi at the inlet and the altitude ho at the outlet, a two-dimensional distance lo from the inlet to the outlet and a two-dimensional travel distance lp from the inlet to the current position of the vehicle (step 1007).

Thereafter, the operation proceeds to step 1005 and stores the coordinates (xi, yi, hp) of the current position of the vehicle in the locus storing unit 54.

According to the embodiment, even when a vehicle travels on a road having an altitude different from an altitude of an actual land form, the altitude at the current position of the vehicle can be pertinently calculated.

An explanation has been given of the third embodiment of the present invention as described above.

Next, an explanation will be given of a fourth embodiment of the present invention.

The embodiment includes processing for calculating the altitude of the vehicle more accurately particularly when the vehicle travels on a road at a position offset from the ground surface such as an elevated line.

Further, according to the embodiment, the constitution of the navigation device 10 is similar to that shown in Fig. 1 through Fig. 3 except the processing executed at the position correcting unit 52 (refer to Fig. 3) similar to those in the second and the third embodiments. Hence, in this embodiment, an explanation will be given only of the processing of the position correcting unit 52 and an explanation of the other parts will be omitted.

Fig. 12 is a flowchart showing processing executed at the position correcting unit 52 according to the fourth embodiment of the present invention.

In Fig. 12, firstly, the position correcting unit 52 executes processing similar to step 501 through step 503 in Fig. 5. That is, the operation obtains the current position of the vehicle and map data at the surrounding of the current position and calculates a road having the highest correlation between the traveling locus of the vehicle and the shape of a road. Further, the operation calculates (corrects) the two-dimensional current position (xi, yi) of the vehicle such that the current position of the vehicle is matched to the calculated road (step 1201).

Next, the operation calculates the altitude hp' of the vehicle by an interpolation calculation based on coordinates of the vertices of a polygonal face (ground surface) where the current position of the vehicle is present (steps 1202, 1203). Then, the operation obtains corresponding road data from the road controlling portion 414 with respect to standard area meshes in correspondence with the polygonal face (ground surface) where the current position of the vehicle is present and determines whether an altitude (offset value) from the ground surface of the road (node) where the current position of the vehicle is present is other than 0 (zero) (step 1204).

When the determination is no (N) in step 1204, that is, when the offset value is 0 (zero), the operation proceeds to step 1205 and executes processing similar to step 504 in Fig. 5. Meanwhile, when the determination is yes (Y) in step 1204, that is, when the offset value is other than 0 (zero), the operation causes the offset value in the map data to be a road height hd (step 1206) and calculates the altitude hp at the current position of the vehicle by adding the road height hd to the altitude hp' calculated at step 1203 (step 1207). Thereafter, the operation proceeds to step 1205 and stores the coordinates (xi, yi, hp) at the current position of the vehicle to the locus storing unit 54.

According to the embodiment, even when the vehicle travels on a road arranged to be offset from the ground surface as in an elevated line of a high speed road, the altitude at the current position of the vehicle can be calculated pertinently.

An explanation has been given of the fourth embodiment of the present invention as described above.

Next, an explanation will be given of a fifth embodiment of the present invention as follows.

According to the embodiment, a case where the map data base 14 does not store map data enabling three-dimensional map display as in the first through the fourth embodiments of the present invention described above, is assumed.

Further, according to the embodiment, the constitution of the navigation device 10 is similar to that shown by Fig. 1 through Fig. 3 except that there is a case where the data style of map data is different and except for processing at the position correcting unit 52. Hence, in this embodiment, an explanation will be given only of the processing of the position correcting unit 52 and an explanation of the other parts will be omitted.

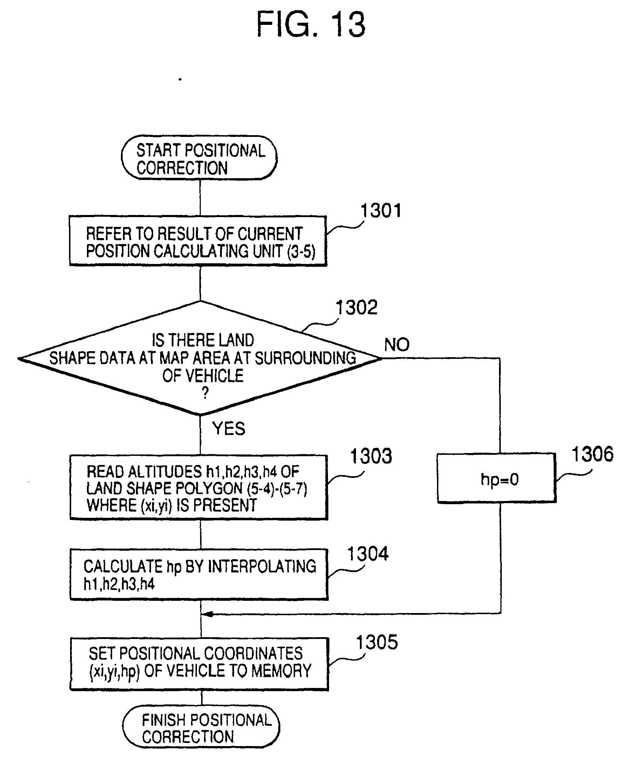

Fig. 13 is a flowchart showing the processing executed at the position correcting unit 52 according to the fifth embodiment of the present invention.

In Fig. 13, firstly, the position correcting unit 52 obtains the current position of the vehicle and map data at the surrounding of the current position and calculates a road having the highest correlation between the traveling locus of the vehicle and the shape of a road based on the data. Further, the operation calculates (corrects) the two-dimensional current position (xi, yi) of the vehicle such that the current position of the vehicle is matched to the calculated road (step 1301).

Next, the position correcting unit 53 determines whether data indicating the altitude is included in the map data by referring to the map data (step 1302). When the determination is yes (Y) in step 1302, processing similar to steps 502 through 504 in Fig. 5 is executed (steps 1303 through 1305).

Further, with respect to step 1302 mentioned above, a determination may be performed on whether the altitude data is present in the data portion (designated by notation 402 in Fig. 4) in correspondence with a mesh including the current position of the vehicle.

Meanwhile, when the determination is no (N) in step 1302, the operation makes the height hp of the current position of the vehicle to be 0 (zero) (step 1306) and thereafter, the operation proceeds to step 1305. That is, coordinates (xi, yi, hp=0) are stored to the locus storing unit 54.

When the data style of the map data does not necessarily include the altitude as mentioned above, the processing at the display processing unit 61 for displaying picture image on the screen of the display 12 is more or less different from those in the first through the fourth embodiments. In more detail, when the data style of the map data includes the altitude, processing similar to that in the first through the fourth embodiments is executed and when the data style of the map data does not include the altitude, a picture image superposing an arrow mark indicating the current position of the vehicle on the two-dimensional map is formed and displayed on the screen of the display 12.

Alternatively, a picture image based on the two-dimensional map may be displayed on the screen of the display 12 when the altitude data in correspondence with at least one area mesh among meshes to be displayed on the screen of the display 12 is not present.

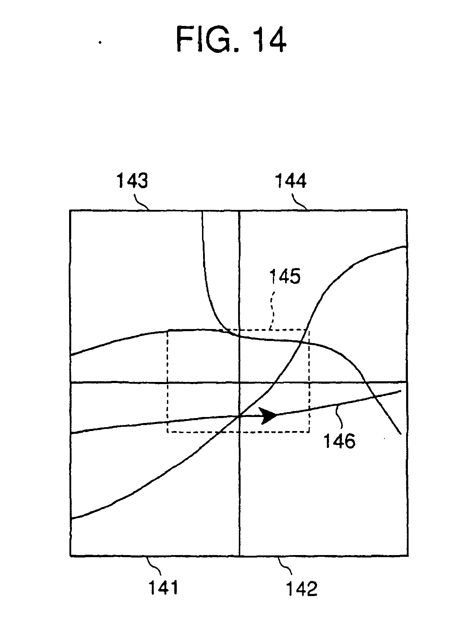

Fig. 14 is a diagram for explaining a case where a region 145 comprising meshes 141 through 144 are displayed on the screen of the display 12. In Fig. 14, the current position of the vehicle is disposed on a road 146 (refer to an arrow mark in Fig. 14). In that case, the display processing unit 61 checks on whether the altitude data in correspondence with the meshes 141 through 144 are present and when no altitude data in correspondence with any of the area meshes is present, the display processing unit 61 forms a picture image superposing an arrow mark where the vehicle is disposed on the two-dimensional map.

An explanation has been given of the fifth embodiment of the present invention as described above.

Next, an explanation will be given of a sixth embodiment of the present invention as follows.

According to the embodiment, a map can be displayed on the display 12 in any of three-dimensional display, quasi three-dimensional display and planar display (two-dimensional display) when an operator operates the input device 18.

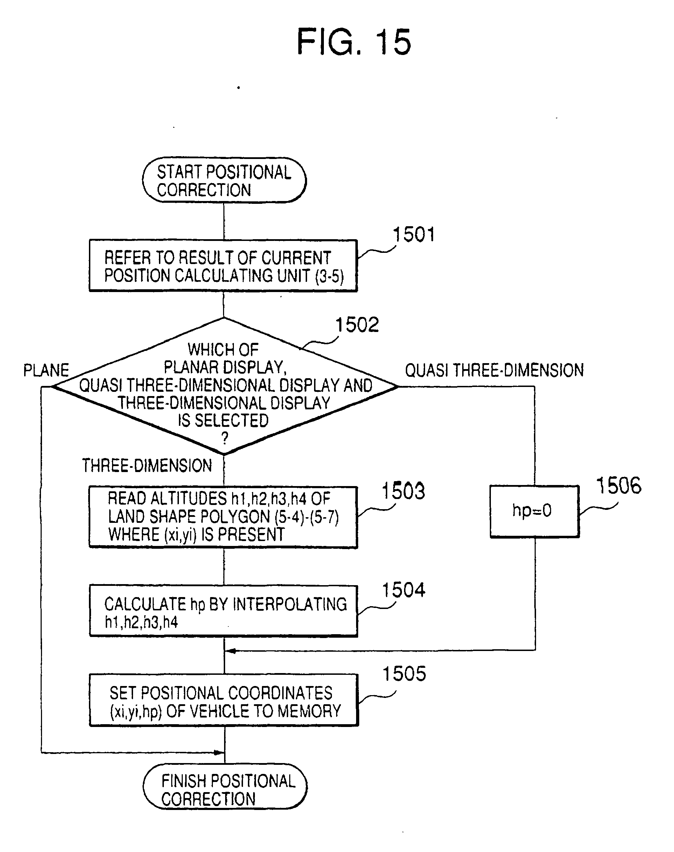

Fig. 15 is a flowchart showing the processing of the position correcting unit 52 according to the sixth embodiment of the present invention.

In Fig. 15, firstly, the position correcting unit 52 obtains the current position of the vehicle and map data in the vicinity of the current position and calculates a road having the highest correlation between the traveling locus of the vehicle and the shape of a road based on the data. Further, the operation calculates (corrects) the two-dimensional current position (xi, yi) of the vehicle such that the current position of the vehicle is matched to the calculated road (step 1501).

Next, the operation determines which of three-dimensional display, quasi three-dimensional display and planar display (two-dimensional display) is selected by referring to an instruction from the operator given to the command analyzing device 56 via the input device 18 (step 1502).

When the planar display is selected in step 1502, the processing is finished since the altitude is not needed in displaying to superpose the current position of the vehicle on a planar map.

Further, even in the case where the quasi three-dimensional display is selected in step 1502, the altitude is not needed in displaying to superpose the current position of the vehicle on a quasi three-dimensional map and accordingly, the operation sets the altitude hp of the vehicle to 0 (zero) (step 1506) and proceeds to step 1505. In this case, the coordinates (xi, yi, hp=0) of the current position of the vehicle is stored to the locus storing unit 54.

Meanwhile, when the three-dimensional display is selected in step 1502, processing similar to steps 502 through 504 in Fig. 5 are carried out (steps 1503 through 1505).

Further, when a map is displayed by the three-dimensional display or the quasi three-dimensional display, the display processing unit 61 obtains map data of an area specified by an observing point and an angle of field of view set by the observing point setting unit 60 via the data reading unit 53, forms a three-dimensional map or a quasi three-dimensional map based on such map data and forms a picture image superposing an arrow mark indicating the position of the vehicle on the formed map.

Thereby, the picture image including the three-dimensional map and the arrow mark indicating the current position of the vehicle, or the picture image including the quasi three-dimensional map provided by viewing the planar map from some observing point and the current position of the map can be displayed on the screen of the display 12.

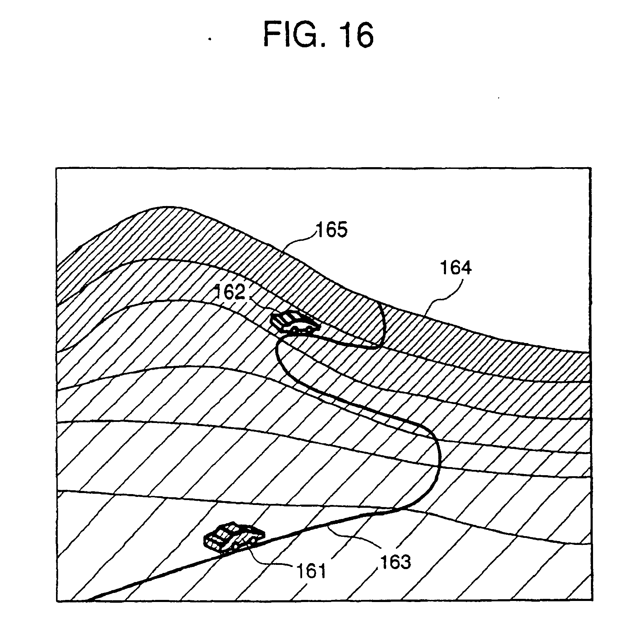

Fig. 16 shows an example when a picture image including a three-dimensional map and a current position of a vehicle is displayed. In Fig. 16, a mark 161 indicating the current position of the vehicle is not an arrow mark but a symbol having the shape of an automobile. In this way, a driver can more easily grasp the position of the vehicle by positioning the mark 161 at a road in the map displayed stereoscopically.

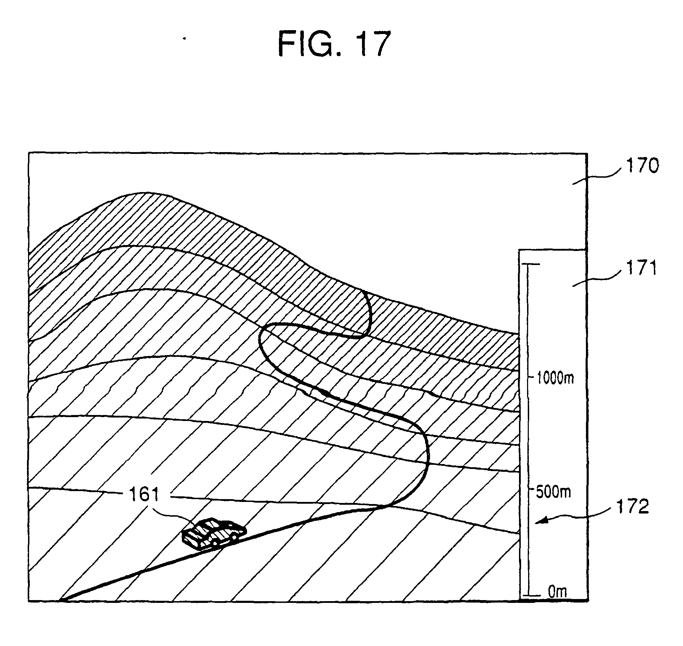

Further, in Fig. 16, the color of the background changes with a change in the altitude (refer to notations 164 and 165). This is carried out by determining the color of polygonal faces (ground surfaces) by referring to the altitude data. According to the example, the higher the altitude, the darker the color is set. On the other hand, when the mark is disposed at a position with a higher altitude, it is constituted to be painted with a thinner color (refer to mark 161 and mark 162). In this way, by securing a contrast with a color of the background, the driver can recognize the mark more easily. Further, as shown by Fig. 17, it is further preferable to display a bar 171 indicating the altitude at a portion of a screen 170 and indicating the altitude at the current position of the vehicle by an arrow mark 172.

Meanwhile, when a map is displayed by two-dimensional display, a picture image may be formed by superposing an arrow mark indicating the position of a vehicle on a two-dimensional planar map as in the conventional case.

According to the embodiment, a map desired by an operator and a mark indicating the current position of a vehicle can be displayed on the screen of the display 12.

An explanation has been given of the sixth embodiment of the present invention as described above.

Further, the present invention is not limited to the above-described respective embodiments but various modification can be performed within the scope of the gist of the present invention.

For example, although according to the respective embodiments described above, the position correcting unit 52 calculates a road having the highest correlation between the traveling locus of a vehicle and the shape of a road based on the current position of the vehicle provided by the current position calculating unit 51 and the map data and corrects the two-dimensional current position of the vehicle such that the current position of the vehicle is matched to the road, the present invention is not limited thereto. Such a correction need not be carried out when the position measuring accuracy by GPS is excellent and map matching is not needed or the like.

Further, the first embodiment may be combined with the third embodiment and/or the fourth embodiment, or the second embodiment may be combined with the third embodiment and/or the fourth embodiment.

In the former case, the processing of Fig. 5 by the position correcting unit 52 may be combined with the processing(s) of Fig. 10 and/or Fig. 12. Further, in the latter case, the processing of Fig. 8 may be combined with the processing(s) of Fig. 10 and/or Fig. 12. Further, the above-described combinations may be combined with the fifth embodiment or the sixth embodiment.

Further, although according to the third embodiment described above, the altitude hp of the vehicle is calculated based on the altitudes of the inlet and the outlet and the traveling distance from the inlet when a vehicle is disposed on a bridge or in a tunnel (refer to steps 1006 and 1007 in Fig. 10), the present invention is not limited thereto. For example, the altitude hi at the inlet of the bridge or the tunnel may be set to the altitude of the vehicle on the bridge or in the tunnel.

Further, in the fourth embodiment described above, when the altitude at the current position of the vehicle is calculated, the height (offset value) in the road data may not be utilized as it is (refer to steps 1206, 1207 in Fig. 12) but the altitude hp may be calculated by carrying out an interpolation calculation by utilizing the altitude at a start point of the road (link) and the altitude at an end point thereof and a distance from the start point to the position of the vehicle.

Further, although according to the respective embodiments described above, the navigation device carries out position measurement based on data from the various sensors and the GPS receiver, it is apparent that the position measurement can be carried out by using only any of the sensors and GPS.

Further, in this specification, means do not necessarily signify physical means but cases where functions of respective means are realized by software are included. Further, a single means or function of a member may be realized by two or more of physical means or members and two or more of means or functions of members may be realized by a single means or member.

As explained above, according to the embodiment, a stereoscopic map is displayed based on three-dimensional map information of a land form, road and the like and the current position of a vehicle can be displayed along a road stereoscopically drawn even when position measuring accuracy in the height direction is low.

**Claims**

1.  A navigation device (10) for displaying a current position of a vehicle on a screen of a display device (12) superposing the current position on a map, wherein said navigation device comprises:

position measuring means (51) for measuring the current position of the vehicle;

reading means (53) for reading map data from a map data base (14) where altitude data as a map constituent element is included; and

displaying means (61) for forming a perspective map based on the map data read by the reading means (53), provided by viewing from a direction at a predetermined angle with respect to a ground surface; **characterized in that**

the navigation device comprises vehicle altitude determining means (52) for determining an altitude of the vehicle, by calculating an altitude at a position corresponding to a two-dimensional position of the vehicle having been measured by said measuring means (51), based on said altitude data as a map constituent element; and **in that**

said displaying means (61) is further provided by determining a position for displaying the vehicle three-dimensionally, according to the two-dimensional position and the altitude of the vehicle that have been calculated and displaying the current position of the vehicle on the screen of the display device by superposing the current position on the perspective map.

2. The navigation device (10) according to claim 1, wherein the vehicle altitude determining means (52) executes map matching using the current position of the vehicle measured by the position measuring means (51) and road data read out from said map data base (14), and calculates an altitude corresponding to the two-dimensional position of the vehicle obtained by the map matching, based on the altitude data as a map constituent element read out from said map data base (14).

3. The navigation device (10) according to claim 1, further comprising:

a grade sensor (26) for detecting an inclination of the vehicle with respect to a horizontal face;

a traveling amount sensor (20) for detecting a traveling amount of the vehicle, and

wherein the vehicle altitude determining means (52) determines an altitude at the current position of the vehicle based on the altitude data read out from the map data base (14) when the vehicle is stationary, and determines an altitude of the current position of the vehicle based on the traveling amount of the vehicle in a vertical direction provided by the grade sensor (26) and the traveling amount sensor (20) when the vehicle is traveling.

4. The navigation device (10) according to claim 1, wherein the map data comprises data of respective mesh areas partitioned in meshes by longitudinal lines and latitudinal lines; and

wherein when a display area to be displayed on the screen of the display device includes a plurality of the mesh areas and the altitude data is not included in data of any one of the mesh areas, the vehicle altitude determining means (52) forms a two-dimensional map in place of the perspective map and displays a two-dimensional current position of the vehicle by superposing the current position on the map.

5. The navigation device (10) according to claim 1, wherein the displaying means (61) displays a map in accordance with any of a first mode for displaying a two-dimensional map by using only information with respect to longitudes and latitudes of the map data, a second mode for displaying a perspective map provided by viewing the two-dimensional map from a direction forming a predetermined angle with respect to the two-dimensional map and a third mode for displaying the perspective map provided by viewing the three-dimensional ground surface specified by the longitudes, the latitudes and the altitude data of the map data from a direction forming a predetermined angle with respect to the ground surface; and

wherein the vehicle altitude determining means (52) sets the altitude at the current position of the vehicle as 0 meter above the sea level when the second mode is selected and determines an altitude of the vehicle, by calculating an altitude at a position corresponding to a two-dimensional position of the vehicle having been measured by said measuring means, based on said altitude data as a map constituent element when the third mode is selected.

6. The navigation device (10) according to claim 1, wherein the vehicle altitude determining means (52) determines the altitude at the current position of the vehicle when a road where the current position of the vehicle is disposed is not positioned along the ground surface, based on altitudes at a start point and an end point of a section of the road which is not disposed along the ground surface.

7. The navigation device (10) according to claim 1, wherein the vehicle altitude determining means (52) calculates the altitude at the current position of the vehicle when the road where the current position of the vehicle is disposed is not positioned along the ground surface, based on the altitudes at the start point and the end point and a traveling distance from the start point to the current position of the vehicle.

8. The navigation device (10) according to claim 1, wherein the vehicle altitude determining means (52) sets the altitude at the current position of the vehicle to either of the altitudes of the start point and the end point when the road where the current position of the vehicle is disposed is not positioned along the ground surface.

9. The navigation device (10) according to claim 1, wherein the map data includes a road altitude data and a land form altitude data; and

   wherein the vehicle altitude determining means (52) calculates the altitude at the current position of the vehicle based on the land form altitude data read out from said map data and the road altitude data at the position where the vehicle exists.

10. The navigation device (10) according to claim 1, wherein the displaying means (61) changes a mark indicating the vehicle displayed on the screen of the displaying device (12) in accordance with a change in the altitude at the current position of the vehicle provided by the vehicle altitude determining means.

11. The navigation device (10) according to claim 1, wherein the displaying means (61) displays the altitude at the current position of the vehicle provided by the vehicle altitude determining means on the screen of the displaying device (12).

12. The navigation device (10) according to claim 1, further comprising a displaying device (12) for displaying a picture image formed by the displaying means (61).

**Patentansprüche**

1. Navigationsgerät (10) zum Anzeigen einer gegenwärtigen Position eines Fahrzeugs auf einem Bildschirm eines Anzeigegeräts (12), wobei die gegenwärtige Position auf einer Karte überlagert wird, wobei das Navigationsgerät umfasst:

   Positionsmessmittel (51) zum Messen der gegenwärtigen Position des Fahrzeugs;
   Lesemittel (53) zum Lesen von Kartendaten einer Kartendatenbank (14), wo Höhendaten als ein Kartenteil-bildendes Element enthalten sind; und
   Anzeigemittel (61) zum Bilden einer perspektivischen Karte basierend auf den Kartendaten, die durch das Lesemittel (53) gelesen wurden, welche bereitgestellt wird durch Betrachten von einer Richtung bei einem vorbestimmten Winkel mit Bezug auf eine Bodenoberfläche;
   **dadurch gekennzeichnet, dass**
   das Navigationsgerät Fahrzeughöhenbestimmungsmittel (52) umfasst zum Bestimmen einer Höhe des Fahrzeugs basierend auf den Höhendaten als ein Kartenteil-bildendes Element durch Berechnen einer Höhe bei einer Position entsprechend zu einer zweidimensionalen Position des Fahrzeugs, die durch das Messmittel (51) gemessen wurden; und **dadurch**, dass
   das Anzeigemittel (61) weiter versehen ist, durch Bestimmen einer Position zum dreidimensionalen Anzeigen des Fahrzeugs gemäß der zweidimensionalen Position und der Höhe des Fahrzeugs, die berechnet wurde, und Anzeigen der gegenwärtigen Position des Fahrzeugs auf dem Bildschirm des Anzeigegeräts durch Überlagern der gegenwärtigen Position auf der perspektivischen Karte.

2. Navigationsgerät (10) nach Anspruch 1, bei dem das Fahrzeughöhenbestimmungsmittel (52) Kartenanpassung ausführt unter Verwendung der gegenwärtigen Position des Fahrzeugs, die durch das Positionsmessmittel (51) gemessen wurde, und Straßendaten, die ausgelesen wurden von der Kartendatenbank (14), und eine Höhe berechnet entsprechend der zweidimensionalen Position des Fahrzeugs, die erhalten wurde durch die Kartenanpassung, basierend auf den Höhendaten als ein Kartenteil-bildendes Element, die ausgelesen wurden von der Kartendatenbank (14).

3. Navigationsgerät (10) nach Anspruch 1, weiter umfassend:

   einen Steigungssensor (26) zum Erkennen einer Neigung des Fahrzeugs mit Bezug auf eine horizontale Fläche;
   einen Bewegungsbetragssensor (20) zum Erkennen eines Bewegungsbetrags des Fahrzeugs, und

wobei das Fahrzeughöhenbestimmungsmittel (52) eine Höhe bestimmt an der gegenwärtigen Position des Fahrzeugs basierend auf den Höhendaten, die von der Kartendatenbank (14) ausgelesen wurden, wenn das Fahrzeug stationär ist, und eine Höhe der gegenwärtigen Position des Fahrzeugs bestimmt basierend auf dem Bewegungsbetrag des Fahrzeugs in einer vertikalen Richtung, der bereitgestellt wird durch den Steigungssensor (26) und den Bewegungsbetragssensor (20), wenn sich das Fahrzeug bewegt.

4. Navigationsgerät (10) nach Anspruch 1, bei dem die Kartendaten Daten umfassen von jeweiligen Netzgebieten, die unterteilt sind in Netze durch Längen- und Breitenlinien; und
wobei, wenn ein Anzeigegebiet, das anzuzeigen ist auf dem Bildschirm des Anzeigegeräts, eine Mehrzahl von Netzgeräten einschließt und die Höhendaten nicht enthalten sind in den Daten von irgendeinem der Netzgebiete, bildet das Fahrzeughöhenbestimmungsmittel (52) eine zweidimensionale Karte anstelle der perspektivischen Karte und zeigt eine zweidimensionale gegenwärtige Position des Fahrzeugs an durch Überlagern der gegenwärtigen Position auf der Karte.

5. Navigationsgerät (10) nach Anspruch 1, bei dem das Anzeigemittel (61) eine Karte anzeigt in Übereinstimmung mit irgendeinem von einem ersten Modus zum Anzeigen einer zweidimensionalen Karte unter Verwendung nur von Information mit Bezug auf die Längen und Breiten der Kartendaten, eines zweiten Modus zum Anzeigen einer perspektivischen Karte, die bereitgestellt wird durch Betrachten der zweidimensionalen Karte von einer Richtung, die einen vorbestimmten Winkel mit Bezug auf die dimensionale Karte bildet, und einen dritten Anzeigemodus zum Anzeigen der perspektivischen Karte, die bereitgestellt wird durch Betrachten der dreidimensionalen Bodenoberfläche, die spezifiziert wird durch die Längen, die Breiten und die Höhendaten der Kartendaten, einer Richtung, die einen vorbestimmten Winkel bildet mit Bezug auf die Bodenoberfläche; und
wobei das Fahrzeughöhenbestimmungsmittel (52) die Höhe an der gegenwärtigen Position des Fahrzeugs als 0 Meter über dem Meeresspiegel festsetzt, wenn der zweite Modus ausgewählt ist, und eine Höhe des Fahrzeugs bestimmt durch Berechnen einer Höhe an einer Position entsprechend zu einer zweidimensionalen Position des Fahrzeugs, die gemessen wurde durch das Messmittel, basierend auf den Höhendaten als ein Kartenteil-bildendes Element, wenn der dritte Modus ausgewählt ist.

6. Navigationsgerät (10) nach Anspruch 1, bei dem das Fahrzeughöhenbestimmungsmittel (52) die Höhe bestimmt an der gegenwärtigen Position des Fahrzeugs, wenn eine Straße, wo die gegenwärtige Position des Fahrzeugs angeordnet ist, nicht entlang der Bodenoberfläche positioniert ist, basierend auf Höhen an einer Startposition und an einer Endposition eines Abschnitts der Straße, die nicht entlang der Bodenoberfläche angeordnet ist.

7. Navigationsgerät (10) nach Anspruch 1, bei dem das Fahrzeughöhenbestimmungsmittel (52) die Höhe berechnet an der gegenwärtigen Position des Fahrzeugs, wenn die Straße, wo die gegenwärtige Position des Fahrzeugs angeordnet ist, nicht entlang der Bodenoberfläche positioniert ist, basierend auf den Höhen an der Startposition und der Endposition und einer Bewegungsentfernung von der Startposition zu der gegenwärtigen Position des Fahrzeugs.

8. Navigationsgerät (10) nach Anspruch 1, bei dem das Fahrzeughöhenbestimmungsmittel (52) die Höhe an der gegenwärtigen Position des Fahrzeugs entweder als die Höhen der Startposition und der Endposition setzt, wenn die Straße, wo die gegenwärtige Position des Fahrzeugs angeordnet ist, nicht entlang der Bodenoberfläche positioniert ist.

9. Navigationsgerät (10) nach Anspruch 1, bei dem die Kartendaten Straßenhöhendaten und Terrainhöhendaten einschließen; und
wobei das Fahrzeughöhenbestimmungsmittel (52) die Höhe an der gegenwärtigen Position des Fahrzeugs berechnet basierend auf den Terrainhöhendaten, die ausgelesen wurden von den Kartendaten, und den Straßenhöhendaten an der Position, wo das Fahrzeug existiert.

10. Navigationsgerät (10) nach Anspruch 1, bei dem das Anzeigemittel (61) eine Markierung ändert, die das Fahrzeug anzeigt, das auf dem Bildschirm des Anzeigegeräts (12) angezeigt ist, in Übereinstimmung mit einer Änderung der Höhe an der gegenwärtigen Position des Fahrzeugs, die bereitgestellt wird durch das Fahrzeughöhenbestimmungsmittel.

11. Navigationsgerät (10) nach Anspruch 1, bei dem das Anzeigemittel (61) die Höhe anzeigt an der gegenwärtigen Position des Fahrzeugs, die bereitgestellt wird durch das Fahrzeughöhenbestimmungsmittel, auf dem Bildschirm des Anzeigegeräts (12).

**12.** Navigationsgerät (10) nach Anspruch 1, weiter umfassend ein Anzeigegerät (12) zum Anzeigen eines Darstellungsbildes, das durch das Anzeigemittel (61) gebildet wird.

**Revendications**

**1.** Dispositif de navigation (10) pour afficher une position courante d'un véhicule sur un écran d'un dispositif d'affichage (12) en superposant la position courante sur une carte, dans lequel ledit dispositif de navigation comprend :

un moyen de mesure de position (51) pour mesurer la position courante du véhicule ;
un moyen de lecture (53) pour lire la carte à partir d'une base de données de carte (14) où des données d'altitude en tant qu'éléments constitutifs de carte sont incluses ; et
un moyen d'affichage (61) pour former une carte en perspective sur la base des données de carte lues par le moyen de lecture (53), alimenté en regardant à partir d'une direction à un angle prédéterminé par rapport à une surface de sol ;
**caractérisé en ce que**
le dispositif de navigation comprend un moyen de détermination d'altitude de véhicule (52) pour déterminer une altitude du véhicule, en calculant une altitude à une position correspondant à une position bidimensionnelle du véhicule ayant été mesurée par ledit moyen de mesure (51), sur la base desdites données d'altitude en tant qu'éléments constitutifs de carte ; et **en ce que**
ledit moyen d'affichage (61) est de plus alimenté en déterminant une position pour afficher le véhicule de façon tridimensionnelle, selon la position bidimensionnelle et l'altitude du véhicule qui ont été calculées et en affichant la position courante du véhicule sur l'écran du dispositif d'affichage en superposant la position courante sur la carte en perspective.

**2.** Dispositif de navigation (10) selon la revendication 1, dans lequel le moyen de détermination d'altitude de véhicule (52) exécute une correspondance de carte en utilisant la position courante du véhicule mesurée par le moyen de mesure de position (51) et des données de route lues à partir de ladite base de données de carte (14), et calcule une altitude correspondant à la position bidimensionnelle du véhicule obtenue par la correspondance de carte, sur la base des données d'altitude, en tant qu'éléments constitutifs de carte, lues à partir de ladite base de données de carte (14).

**3.** Dispositif de navigation (10) selon la revendication 1, comprenant de plus :

un capteur de pente (26) pour détecter une inclinaison du véhicule par rapport à une surface horizontale ;
un capteur de quantité de déplacement (20) pour détecter une quantité de déplacement du véhicule, et
dans lequel le moyen de détermination d'altitude de véhicule (52) détermine une altitude à la position courante du véhicule sur la base des données d'altitude lues à partir de la base de données de carte (14) lorsque le véhicule est immobile, et détermine une altitude de la position courante du véhicule sur la base de la quantité de déplacement du véhicule dans une direction verticale fournie par le capteur de pente (26) et le capteur de quantité de déplacement (20) lorsque le véhicule se déplace.

**4.** Dispositif de navigation (10) selon la revendication 1, dans lequel les données de carte comprennent des données de zones maillées respectives divisées en mailles par des lignes longitudinales et des lignes latitudinales ; et
dans lequel, quand une zone d'affichage à afficher sur l'écran du dispositif d'affichage comprend une pluralité des zones maillées et que les données d'altitude ne sont pas incluses dans les données d'aucune des zones maillées, le moyen de détermination d'altitude de véhicule (52) forme une carte bidimensionnelle à la place de la carte en perspective et affiche une position courante bidimensionnelle du véhicule en superposant la position courante sur la carte.

**5.** Dispositif de navigation (10) selon la revendication 1, dans lequel le moyen d'affichage (61) affiche une carte selon n'importe lequel d'un premier mode pour afficher une carte bidimensionnelle en utilisant seulement des informations concernant des longitudes et des latitudes des données de carte, d'un deuxième mode pour afficher une carte en perspective alimentée en regardant la carte bidimensionnelle à partir d'une direction formant un angle prédéterminé par rapport à la carte bidimensionnelle, et d'un troisième mode pour afficher la carte en perspective alimentée en regardant la surface de sol tridimensionnelle spécifiée par les longitudes, les latitudes et les données d'altitude des données de carte à partir d'une direction formant un angle prédéterminé par rapport à la surface de sol ; et
dans lequel le moyen de détermination d'altitude de véhicule (52) fixe l'altitude à la position courante du véhicule à 0 mètre au-dessus du niveau de la mer lorsque le deuxième mode est sélectionné et détermine une altitude du véhicule, en calculant une altitude à une position correspondant à une position bidimensionnelle du véhicule ayant été mesurée par ledit moyen de mesure, sur la base desdites données d'altitude en tant qu'éléments constitutifs de carte lorsque le troisième mode est sélectionné.

6. Dispositif de navigation (10) selon la revendication 1, dans lequel le moyen de détermination d'altitude de véhicule (52) détermine l'altitude à la position courante du véhicule quand une route où la position courante du véhicule est disposée n'est pas positionnée le long de la surface de sol, sur la base des altitudes à un point de départ et à un point d'arrivée d'une section de la route qui n'est pas disposée le long de la surface de sol.

7. Dispositif de navigation (10) selon la revendication 1, dans lequel le moyen de détermination d'altitude de véhicule (52) calcule l'altitude à la position courante du véhicule quand la route où la position courante du véhicule est disposée n'est pas positionnée le long de la surface de sol, sur la base des altitudes au point de départ et au point d'arrivée et d'une distance de déplacement allant du point de départ jusqu'à la position courante du véhicule.

8. Dispositif de navigation (10) selon la revendication 1, dans lequel le moyen de détermination d'altitude de véhicule (52) fixe l'altitude à la position courante du véhicule à n'importe laquelle des altitudes du point de départ et du point d'arrivée quand la route où la position courante du véhicule est disposée n'est pas positionnée le long de la surface de sol.

9. Dispositif de navigation (10) selon la revendication 1, dans lequel les données de carte comprennent des données d'altitude de route et des données d'altitude de forme de terrain ; et
dans lequel le moyen de détermination d'altitude de véhicule (52) calcule l'altitude à la position courante du véhicule sur la base des données d'altitude de forme de terrain lues à partir desdites données de carte et des données d'altitude de route à la position où le véhicule se trouve.

10. Dispositif de navigation (10) selon la revendication 1, dans lequel le moyen d'affichage (61) change un repère indiquant le véhicule affiché sur l'écran du dispositif d'affichage (12) selon un changement de l'altitude à la position courante du véhicule fourni par le moyen de détermination d'altitude de véhicule.

11. Dispositif de navigation (10) selon la revendication 1, dans lequel le moyen d'affichage (61) affiche l'altitude à la position courante du véhicule fournie par le moyen de détermination d'altitude de véhicule sur l'écran du dispositif d'affichage (12).

12. Dispositif de navigation (10) selon la revendication 1, comprenant de plus un dispositif d'affichage (12) pour afficher une image de scène formée par le moyen d'affichage (61).

# FIG. 1

# FIG. 2

# FIG. 3

34

OPERATION PROCESSING UNIT

S3 →

56
COMMAND ANALYZING UNIT

S4 →

S11
S5
S6
S7
S8

51

CURRENT POSITION CALCULATING UNIT

57
ROUTE CALCULATING UNIT

52
POSITION CORRECTING UNIT

58
ROUTE STORING UNIT

53
DATA READING UNIT ← S2

59
ROUTE GUIDING UNIT

S3 →

54
LOCUS STORING UNIT

60
OBSERVING POINT SETTING UNIT

55
MENU DISPLAYING UNIT

61
DISPLAY PROCESSING UNIT

→ S1

# FIG. 4

**DATA PORTION** — 402

| ALTITUDE DATA 1 | — 421 |
| ALTITUDE DATA 2 | |

| ROAD DATA 1 | — 422 |
| ROAD DATA 2 | |

| BUILDING DATA 1 | — 423 |
| BUILDING DATA 2 | |

**DATA CONTROL PORTION** — 401

410-n

| MESH CODE | — 411 |
| ATTRIBUTE INFORMATION | — 412 |
| ALTITUDE DATA CONTROL PORTION | — 413 |
| ROAD DATA CONTROL PORTION | — 414 |
| BUILDING DATA CONTROL PORTION | — 415 |

410-1

# FIG. 5

START POSITIONAL
CORRECTION

REFER TO RESULT OF CURRENT
POSITION CALCULATING UNIT (3-5)  501

READ ALTITUDES h1,h2,h3,h4 OF LAND
SHAPE POLYGON (5-4)-(5-7) WHERE
(xi,yi) IS PRESENT  502

CALCULATE hp BY INTERPOLATING
h1,h2,h3,h4  503

SET POSITIONAL COORDINATES
(xi,yi,hp) OF VEHICLE TO MEMORY  504

FINISH POSITIONAL
CORRECTION

# FIG. 6

# FIG. 7

$$ha = \frac{ya - y1}{y4 - y1} \times (h4 - h1) + h1 \cdots (1)$$

$$hb = \frac{yb - y2}{y3 - y2} \times (h3 - h2) + h2 \cdots (2)$$

$$hp = \frac{xi - x1}{x2 - x1} \times (hb - ha) + ha \cdots (3)$$

EP 0 881 466 B1

# FIG. 8

```
        ┌─────────────────────┐
        │  START POSITIONAL   │
        │     CORRECTION      │
        └─────────────────────┘
                   │
                   ▼
           ◇ VEHICLE IS STOPPING ? ◇ ──── 801 ──── NO ──────────────┐
                   │                                                  │
                  YES                                                 │
                   ▼                                                  ▼
   ┌─────────────────────────────┐              ┌───────────────────────────────┐
   │ REFER TO RESULT OF CURRENT  │── 802        │ DETECT TRAVEL DISTANCE Δ1     │── 806
   │ POSITION CALCULATING UNIT   │              │ IN PREDETERMINED TIME Δt BY   │
   │ (3-5)                       │              │ WHEEL SPEED SENSOR            │
   └─────────────────────────────┘              └───────────────────────────────┘
                   │                                              │
                   ▼                                              ▼
   ┌─────────────────────────────┐              ┌───────────────────────────────┐
   │ READ ALTITUDES h1,h2,h3,h4  │── 803        │ DETECT GRADE VALUE θ IN       │── 807
   │ OF LAND SHAPE POLYGON       │              │ PREDETERMINED TIME Δt BY      │
   │ (5-4)-(5-7) WHERE (xi,yi)   │              │ GRADE SENSOR                  │
   │ IS PRESENT                  │              └───────────────────────────────┘
   └─────────────────────────────┘                              │
                   │                                              ▼
                   ▼                              ┌───────────────────────────────┐
   ┌─────────────────────────────┐              │       Δh = Δ1·sin θ           │── 808
   │ CALCULATE hp BY             │── 804        └───────────────────────────────┘
   │ INTERPOLATING h1,h2,h3,h4   │                              │
   └─────────────────────────────┘                              ▼
                   │                              ┌───────────────────────────────┐
                   ▼◄───────────────────────┐    │        Δh = hp'+ Δh           │── 809
   ┌─────────────────────────────┐          │    │ WHERE hp' IS ALTITUDE VEHICLE │
   │ SET POSITIONAL COORDINATES  │── 805     │   │ AT PRECEDING TIME             │
   │ (xi,yi,hp) OF VEHICLE TO    │          └────└───────────────────────────────┘
   │ MEMORY                      │
   └─────────────────────────────┘
                   │
                   ▼
        ┌─────────────────────┐
        │  FINISH POSITIONAL  │
        │     CORRECTION      │
        └─────────────────────┘
```

EP 0 881 466 B1

# FIG. 9

# FIG. 11

# FIG. 10

START POSITIONAL CORRECTION

↓

REFER TO RESULT OF CURRENT POSITION CALCULATING UNIT (3-5) — 1001

↓

ROAD WHERE (xi,yi) IS PRESENT IS BRIDGE OR TUNNEL ? — 1002

YES →

OBTAIN LAND SHAPE ALTITUDES hi & ho AT INLET AND OUTLET OF THE ROAD — 1006

↓

CALCULATE ALTITUDE hp OF VEHICLE FROM LAND SHAPE ALTITUDES hi,ho, TRAVEL DISTANCE lp AND LENGTH lo OF THE ROAD — 1007

NO

↓

READ ALTITUDES h1,h2,h3,h4 OF LAND SHAPE POLYGON (5-4)-(5-7) WHERE (xi,yi) IS PRESENT — 1003

↓

CALCULATE hp BY INTERPOLATING h1,h2,h3,h4 — 1004

↓

SET POSITIONAL COORDINATES (xi,yi,hp) OF VEHICLE TO MEMORY — 1005

↓

FINISH POSITIONAL CORRECTION

EP 0 881 466 B1

# FIG. 12

START POSITIONAL CORRECTION

REFER TO RESULT OF CURRENT POSITION CALCULATING UNIT (3-5) — 1201

READ ALTITUDES h1,h2,h3,h4 OF LAND SHAPE POLYGON (5-4)-(5-7) WHERE (xi,yi) IS PRESENT — 1202

CALCULATE hp BY INTERPOLATING h1,h2,h3,h4 — 1203

IS THERE ROAD ALTITUDE INFORMATION AT ROAD OF POSITION (xi,yi) OF VEHICLE ? — 1204

YES

CALCULATE ROAD HEIGHT AT POSITION (xi,yi) OF VEHICLE — 1206

hp-hp'+hd — 1207

NO

SET POSITIONAL COORDINATES (xi,yi,hp) OF VEHICLE TO MEMORY — 1205

FINISH POSITIONAL CORRECTION

# FIG. 13

```
        ┌─────────────────────┐
        │  START POSITIONAL   │
        │     CORRECTION      │
        └─────────────────────┘
                   │
                   ▼                        1301
        ┌─────────────────────┐
        │ REFER TO RESULT OF CURRENT      │
        │ POSITION CALCULATING UNIT (3-5) │
        └─────────────────────┘
                   │
                   ▼                        1302
              ╱─────────╲              NO
          IS THERE LAND
      SHAPE DATA AT MAP AREA AT SURROUNDING ──────┐
              OF VEHICLE                           │
                  ?                                │
              ╲─────────╱                          │
                   │ YES                           │
                   ▼              1303             ▼          1306
        ┌─────────────────────┐         ┌─────────────────┐
        │ READ ALTITUDES h1,h2,h3,h4 OF  │         │     hp=0         │
        │ LAND SHAPE POLYGON (5-4)-(5-7) │         └─────────────────┘
        │ WHERE (xi,yi) IS PRESENT       │                  │
        └─────────────────────┘                  │
                   │              1304            │
                   ▼                              │
        ┌─────────────────────┐                  │
        │ CALCULATE hp BY INTERPOLATING  │                  │
        │ h1,h2,h3,h4                    │                  │
        └─────────────────────┘                  │
                   │◄─────────────────────────────┘
                   ▼              1305
        ┌─────────────────────┐
        │ SET POSITIONAL COORDINATES     │
        │ (xi,yi,hp) OF VEHICLE TO MEMORY│
        └─────────────────────┘
                   │
                   ▼
        ┌─────────────────────┐
        │  FINISH POSITIONAL  │
        │     CORRECTION      │
        └─────────────────────┘
```

# FIG. 14

# FIG. 15

```
      ┌─────────────────────┐
      │  START POSITIONAL   │
      │     CORRECTION      │
      └─────────────────────┘
                 │
                 │                        1501
      ┌─────────────────────────┐
      │ REFER TO RESULT OF CURRENT
      │ POSITION CALCULATING UNIT (3-5) │
      └─────────────────────────┘
                 │
                 │                    1502
              ◇ WHICH OF
  PLANE      PLANAR DISPLAY,              QUASI THREE-DIMENSION
         QUASI THREE-DIMENSIONAL DISPLAY AND
            THREE-DIMENSIONAL DISPLAY
                 IS SELECTED
                    ?

        THREE-DIMENSION
      ┌─────────────────────────┐              ┌──────────┐
      │ READ ALTITUDES h1,h2,h3,h4 OF │  1503    │  hp=0    │  1506
      │ LAND SHAPE POLYGON (5-4)-(5-7) │         └──────────┘
      │ WHERE (xi,yi) IS PRESENT │
      └─────────────────────────┘
                 │
      ┌─────────────────────────┐   1504
      │ CALCULATE hp BY INTERPOLATING │
      │ h1,h2,h3,h4 │
      └─────────────────────────┘
                 │
      ┌─────────────────────────┐   1505
      │ SET POSITIONAL COORDINATES │
      │ (xi,yi,hp) OF VEHICLE TO MEMORY │
      └─────────────────────────┘
                 │
      ┌─────────────────────┐
      │  FINISH POSITIONAL  │
      │     CORRECTION      │
      └─────────────────────┘
```

# FIG. 16

# FIG. 17